# EUROPÄISCHE PATENTSCHRIFT

(11) **EP 3 760 415 B1**
(45) Veröffentlichungstag und Bekanntmachung des Hinweises auf die Patenterteilung: **13.12.2023**
(21) Anmeldenummer: 20183726.7
(22) Anmeldetag: 02.07.2020
(51) Int. Cl.: B29C 70/00, B29D 23/00, F16L 9/08, F16L 9/12, F16L 9/133, E02B 11/00, B29C 70/16

(54) **ROHR**
PIPE
TUYAU

(30) Priorität: 03.07.2019 DE 102019117980
(43) Veröffentlichungstag der Anmeldung: 06.01.2021
(73) Patentinhaber: Frieß, Walter H., 89177 Börslingen (DE)
(72) Erfinder: Frieß, Walter H., 89177 Börslingen (DE)
(74) Vertreter: Baur & Weber Patentanwälte PartG mbB

(56) Entgegenhaltungen:
- WO-A1-2012/153397
- DE-A1- 19 531 245
- DE-A1-102004 027 795
- DE-C1- 19 826 950
- DE-C2- 19 531 245
- US-B2- 6 536 480

## Beschreibung

Die Erfindung betrifft ein Rohr, das beispielsweise zum Flüssigkeitstransport, insbesondere zur Flüssigkeitsableitung von Sickerwasser, eingesetzt werden kann.

Auf einer Deponie werden Abfälle langfristig gelagert. In die Deponie einsickernde Niederschläge und Oberflächenwasser kommen mit den gelagerten Abfällen in Berührung, lösen Schadstoffe aus den Abfällen und stellen ebenso wie heraus sickernde Eigenfeuchte der Abfälle eine Gefahr für die Umwelt dar. Dieses Deponiesickerwasser wird durch eine Sickerrohrleitung aufgefangen und zur weiteren Verarbeitung abgeleitet. Die Sickerrohre der Sickerrohrleitung weisen Schlitze auf, durch die das Deponiesickerwasser ins Rohrinnere gelangen und dort abfließen kann.

Durch Alterung der Rohrleitung und mechanische Belastung durch den über der Rohrleitung aufgeschütteten Abfall erfahren die Rohre mit zunehmender Zeit und zunehmender Aufschüttung von Abfall eine zum Teil erhebliche Deformation und nehmen einen eher elliptischen Querschnitt an. Die Deformation kann bis zum Bruch mit Einsturz von Rohrbereichen führen. Letzteres soll durch eine Sanierung vermieden werden, um den Flüssigkeitsabtransport aufrecht zu erhalten auch wenn es zu einer weiteren Deformation der Altrohrleitung oder ihrem Bruch kommt. Im Rahmen einer grabenlosen Rohrleitungssanierung können neue Rohre in einer Altrohrleitung verlegt werden. Die Rohre können mittels eines Roboters in die alten Rohrleitungen eingebracht und verlegt werden. Der Außendurchmesser der neuen Rohre richtet sich nach dem noch im deformierten Rohr zur Verfügung stehenden Raum, sodass die neuen Rohre einen geringeren Querschnitt als die deformierten Altrohre haben.

Das Verlegen einer konventionellen Rohrleitung erfolgt zum Schutz vor mechanischer Belastung vorzugsweise in einem Bett aus umgebendem Material, beispielsweise aus Sand. Auf diese Weise wirkt radial allseitig eine Kraft auf die Rohrleitung. Die seitliche Stützwirkung des Bettes wirkt einer Rohrverformung durch die von oben wirkende Last des aufgeschichteten Abfalls entgegen. Bei einer Verlegung von Rohren in einer bestehenden Altrohrleitung liegt das Rohr jedoch lediglich an seiner Unterseite auf, sodass keine seitliche Stützung einer von oben wirkenden Last entgegenwirken kann.

Zur Erhöhung der Stabilität ist aus der DE 10 2008 033 577 ein faserverstärktes Kunststoffrohr bekannt. Eine Verbindungsanordnung zum Verbinden zweier Faserverbundrohre wird in der DE 10 2004 027 795 beschrieben.

Die DE 198 26 950 zeigt ein Schutzrohr für eine Versorgungsleitung. Das Rohr weist ring- oder wendelförmige Stützelemente und ring- oder wendelförmige Verformungselemente auf, die in axialer Richtung aneinander angrenzend angeordnet sind. Die Verformungselemente weisen eine höhere axiale Verformbarkeit als die Stützelemente auf, sodass die Länge des Stützrohrs durch Aufbringen axialer Kräfte verkürzt werden kann.

Die DE 10 2004 027795 zeigt eine Verbindungsanordnung, insbesondere zum kraftschlüssigen Anbinden von mindestens einem Faserverbund-Bauteil, beispielsweise ein Rohr, an ein weiteres Bauteil. Es ist ein Versiegelungselement vorgesehen, welches die exponierten Teile des Faserverbundbauteils gas- und fluiddicht umgibt, sowie ein Belastungselement, welches den Kraftschluss zwischen den verbundenen Bauteilen sicherstellt.

Die US 6 536 480 B2 zeigt ein Hochdruckrohrelement, mit dem Ölförderanlagen, insbesondere im Meer, ausgerüstet werden. Das Hochdruck-Rohrleitungselement ist eine Baugruppe, die zwei Anschlüssen aufweist, die jeweils an den beiden Enden eines Metallrohrs angeschweißt sind. Die metallische Baugruppe ist mit einem Ring versehen. Die Ummantelung des Rohrs besteht aus einer ausreichenden Anzahl von Ummantelungsschichten, um einem bestimmten Innendruck standzuhalten. Übergangsbereiche und in der Nähe der Schweißnähte bestehen aus zusätzlichen Umreifungsschichten.

Es stellt sich die Aufgabe ein alternatives stabiles Rohr, insbesondere zum Flüssigkeitstransport, bereit zu stellen, das beispielsweise bei einer grabenlosen Sanierung von Altrohren eingesetzt werden kann.

Zu diesem Zweck ist ein Rohr mit einem Rohrkörper aus einem ersten Material, der eine Innenwand des Rohres bildet und der sich axial erstreckende erste Bereiche und zumindest zwei sich axial erstreckende zweite Bereiche aufweist, vorgesehen. Die Innenwand des Rohres ist aus dem ersten Material. Die zweiten Bereiche sind jeweils eine radial umlaufende Aussparung im Rohrkörper zwischen zwei ersten Bereichen, wobei die Aussparung mit einem auf dem ersten Material ausgebrachten zweiten Material zumindest teilweise aufgefüllt ist. Das erste Material unterscheidet sich vom zweiten Material, das faserverstärkt ist. Zumindest einer der ersten Bereiche ist zwischen zwei zweiten Bereichen angeordnet und rippenförmig umlaufend ausgebildet.

Die Kombination des Rohrkörpers aus dem ersten Material mit dem darauf bereichsweise, jenseits der ersten Bereiche aufgebrachten faserverstärkten zweiten Material ermöglicht die Kombination von mechanischer Stabilität durch das zweite Material mit chemischer Beständigkeit gegenüber den im Rohr transportierten Fluiden, also Gasen und insbesondere Flüssigkeiten. Die hohe mechanische Stabilität ermöglicht, das Rohr auch bei der grabenlosen Altrohrsanierung einzusetzen, wenn keine seitliche Stützung mangels eines Rohrbetts für das ins Altrohr eingelegte Rohr gegeben ist. Das beschriebene Rohr ist vorteilhafterweise ausgebildet zur Ableitung von Sickerwasser, insbesondere Deponiesickerwasser, und kann in diesem Fall auch als Sickerrohr bezeichnet werden.

Zumindest einer der ersten Bereiche kann als stirnseitiger Anschlussbereich des Rohrs ausgebildet sein. Stirnseitige Anschlussbereiche ermöglichen, mehrere Rohre zu einer Rohrleitung zu verbinden. Die Verbindung kann mittels üblicher Rohrleitungsverbindungstechniken, z.B. Steckverbindungen oder Rastverbindungen, erfolgen. Auch Rohrausführungen mit mehr als zwei Anschlussbereichen sind denkbar.

Die ersten Bereiche können ein oder mehrere Löcher umfassen, die einen Flüssigkeitseintritt, insbesondere für Sickerwasser, oder -ausritt ermöglichen. Solch ein erster Bereich kann zwischen zwei zweiten Bereichen angeordnet und rippenförmig umlaufend ausgebildet sein und mehrere sich radial erstreckende Löcher entlang seines Umfangs aufweisen. Nichtsdestotrotz können Löcher auch im Anschlussbereich vorgesehen sein.

In einem Randbereich des zweiten Bereichs zum ersten Bereich kann eine radial umlaufende Stufe oder eine kontinuierliche Außendurchmesseränderung des Rohrkörpers ausgebildet sein, mittels der eine mechanische Stabilisierung an der Grenze vom ersten und zweiten Bereich erzielt werden soll.

Vorteilhafterweise haben die ersten und zweiten Bereiche, zumindest jenseits der Anschlussbereiche, denselben Innendurchmesser, wobei eine Wanddicke der ersten Bereiche größer ist als eine Wanddicke des zweiten Bereichs. Dies stärkt die mechanische Belastbarkeit auch in den ersten Bereichen. Die zweiten Bereiche erstrecken sich wegen ihres gewünschten stützenden Effekts üblicherweise über einen längeren axialen Bereich des Rohres als die ersten Bereiche.

Der Rohrkörper kann aus einem konventionellen Rohrrohling gefräst sein, um die Aussparungen der zweiten Bereiche auszubilden. In ihnen ist als zweites Material ein Faser-Kunststoff-Verbundmaterial mit hoher mechanischer Belastbarkeit eingebracht ist. Das Aufbringen des zweiten Materials kann in einfacher Weise durch in den zweiten Bereichen aufgewickelte Fasern erfolgen. Das zweite Material umfasst Glasfasern und/oder Basalt, welche kostengünstig sind. Basaltfasern ziehen zudem weniger Flüssigkeit. Das erste Material umfasst vorteilhafterweise Polyethylen, kurz PE, das chemisch beständig und somit auch für aggressives Deponiesickerwasser geeignet ist.

Nach dem Aufbringen des zweiten Materials sind keine spanabtragenden Fertigungsschritte, z.B. Fräsen und Sägen, mehr in den zweiten Bereichen erforderlich. Solche Fertigungsschritte konzentrieren sich auf die ersten Bereiche. Dadurch werden Probleme umgangen, die bei der Verarbeitung von faserverstärktem Material im Rahmen der Fertigung entstehen können und eine Belastung von Mensch und Umwelt mit Faserspänen und den damit möglicherweise einhergehenden Risiken für Gesundheit und Umwelt vermieden. Zudem sind die Fasern im Faser-Kunststoff-Verbundmaterial vor mechanischer Belastung und Abrieb bei Transport und späterer Montage der Rohre geschützt.

Eine außenmantelflächige Beschichtung auf dem Rohr zum Schutz vor mechanischer Beanspruchung ist optional und führt zu einem zusätzlichen Schutz bei Transport und Montage.

Weitere vorteilhafte Ausführungen ergeben sich aus den abhängigen Ansprüchen.

Im Folgenden wird die Erfindung anhand von Ausführungsbeispielen in den Zeichnungen näher erläutert.
- Figur 1: zeigt eine dreidimensionale Ansicht eines Ausführungsbeispiels eines Rohres.
- Figur 2: zeigt ein Ausführungsbeispiel eines Rohrkörpers in einer dreidimensionalen Ansicht.
- Figur 3: zeigt ein Ausführungsbeispiel eines Rohrkörpers in der Seitenansicht.
- Figuren 4A bis 4D: zeigen Details des Rohrkörpers aus Figur 3.
- Figur 5: zeigt einen Querschnitt eines Ausführungsbeispiels eines Rohres in einem deformierten Altrohr.

In den Figuren sind gleiche oder funktional gleich wirkende Bauteile mit den gleichen Bezugszeichen versehen.

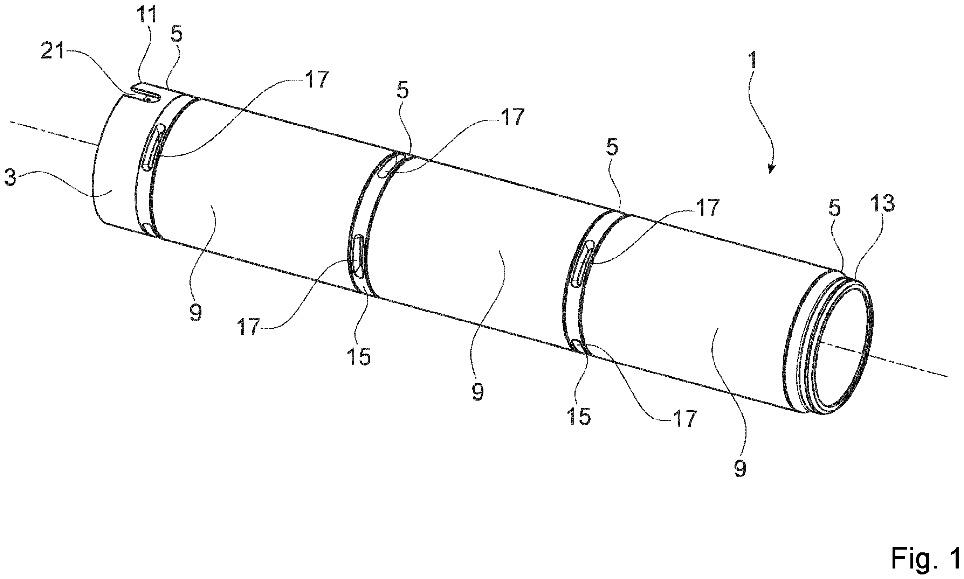

Figur 1 zeigt eine dreidimensionale Ansicht eines Ausführungsbeispiels eines Rohres 1 für eine Rohrleitung umfassend mehrerer solcher Rohre 1, die miteinander verbunden sind. Das Rohr 1 ist in diesem Ausführungsbeispiel als Deponiesickerrohr ausgebildet, das im Rahmen einer grabenlosen Sanierung in eine bestehende Altsickerrohrleitung einer Deponie eingeführt und mit anderen Rohren seiner Art verbunden werden kann.

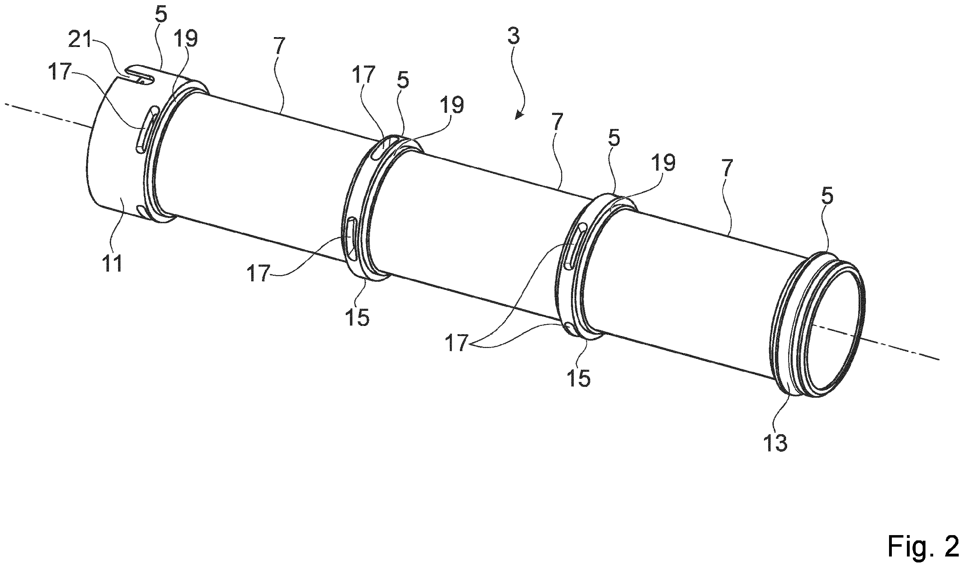

Das Rohr 1 umfasst einen zylinderförmigen Rohrkörper 3 mit sich axial erstreckenden ersten Bereichen 5 und zweiten Bereichen 7 (in Figur 2 erkennbar), die zwischen den ersten Bereichen 1 angeordnet sind und mit einem zweiten Material 9 aufgefüllt sind. Der Rohrkörper 3 bildet eine Innenwand der Rohrs 1, entlang der ein Flüssigkeitstransport von Deponiesickerwasser erfolgt. Der Rohrkörper 3 ist aus einem ersten Material, das widerstandsfähig gegenüber einer in dem Rohr transportierten Flüssigkeit, d. h. insbesondere gegenüber Deponiesickerwasser, ist. Das erste Material umfasst oder besteht aus Polyethylen, kurz PE. Es zeichnet sich durch hohe chemische Beständigkeit, gute elektrische Isolationsfähigkeit und ein gutes Gleitverhalten aus. Die mechanischen Eigenschaften sind jedoch im Vergleich zu anderen Kunststoffen eher durchschnittlich.

Die stirnseitigen ersten Bereiche 5 sind als Anschlussbereiche 11, 13 ausgebildet, die die Verbindung zweier Rohre 1 mittels einer Steckverbindung ermöglichen. Ein erster Anschlussbereich 11 ist als erste Muffe, mit einer optionalen Rohraufweitung zumindest an der Rohrinnenseite, ausgebildet. Ein zweiter Anschlussbereich 13 ist als zweite Muffe mit einer Verjüngung des Rohraußendurchmessers derart ausgebildet, dass sie in die erste Muffe eines weiteren Rohres 1 gesteckt werden kann. Die stirnseitige Rohrseite mit dem zweiten Anschlussbereich 13 wird auch als Spitzende bezeichnet. In diesem Ausführungsbeispiel sind keine Dichtungen in den Muffen vorgesehen, da Dichtheit im Verbindungsbereich zweier Sickerrohre nicht unbedingt erforderlich ist. Nichtsdestotrotz kann in einem anderen Ausführungsbeispiel eine Dichtung (in Figur 1 nicht dargestellt) zwischen miteinander verbundenen Anschlussbereichen 11, 13 vorgesehen sein.

Zwischen den Anschlussbereichen 11, 13 sind als Rippen 15 ausgebildete erste Bereiche 5 vorgesehen, die sich radial erstreckende Löcher, auch als Schlitze 17 bezeichnet, aufweisen, durch die Flüssigkeit ins Rohr 1 gelangen kann. In diesem Ausführungsbeispiel sind vier äquidistante Schlitze 17 in jeder Rippe 15 vorgesehen. Die Schlitze 17 zweier benachbarter Rippen 15 sind zueinander versetzt angeordnet. Derartige Schlitze 17 sind auch im ersten Anschlussbereich 11 vorgesehen. Die Muffen und Schlitze 17 sind funktionale Bereiche, die die Verbindung zweier Rohre 1 und die Entwässerung mittels des Rohres 1 ermöglichen.

In den zweiten Bereichen 7 zwischen den ersten Bereichen 5 ist das zweite Material 9 aufgebracht, sodass sie als materialverstärkende Bereiche zwischen den ersten Bereichen 5 zur mechanischen Stabilisierung des Rohres 1 wirken. Das zweite Material 9 ist ein faserverstärktes Material, insbesondere ein Faser-Kunststoff-Verbundmaterial mit Verstärkungsfasern und einer Kunststoffmatrix. Die Matrix umgibt die Fasern, die durch adhäsive Wechselwirkungen an die Matrix gebunden sind. Faser-Kunststoff-Verbundmaterialien weisen üblicherweise hohe spezifische Steifigkeiten und Festigkeiten auf. Das zweite Material 9 kann beispielsweise Glasfasern oder Basaltfasern umfassen. Sie sind kostengünstiger als beispielsweise Karbon, das auch geeignet wäre. Die physikalischen Eigenschaften und damit die Anwendungsgebiete der Basaltfasern sind denen der Glasfasern ähnlich. Basaltfasern haben gegenüber Glasfasern den Vorteil, dass sie weniger Feuchtigkeit ziehen als Glasfasern, welche aufquellen könnten, und sich damit besser für Sickerrohre eignen.

Die Kombination des Rohrkörpers 3 aus dem ersten Material mit dem darauf bereichsweise aufgebrachten faserverstärkten zweiten Material 9 ermöglicht die Kombination von mechanischer Stabilität und chemischer Beständigkeit gegenüber den im Rohr 1 transportierten Flüssigkeiten, die im Fall von Deponiesickerwasser sehr aggressiv sein können. Der aus dem ersten Material geformte Rohrkörper 3 mit seiner Rohrinnenwand aus dem ersten Material ist beständig gegenüber den transportierten Flüssigkeiten. Das zweite Material 9, das sich über den Großteil des Rohres 1 zwischen den Anschlussbereichen 11, 13 erstreckt, verleiht dem Rohr 1 die erforderliche mechanische Stabilität, insbesondere gegenüber von oben wirkender Belastung. Bei den ersten Bereichen 5, auf denen kein zweites Material 9 aufgebracht ist, ist die Wanddicke des Rohrkörpers 3 größer als bei den zweiten Bereichen 7, um auch in diesen ersten Bereichen 5 eine gute Stabilität zu erreichen.

Figur 2 zeigt den Rohrkörper 3 des in Figur 1 dargestellten Rohres 1 in einer dreidimensionalen Ansicht.

Der zylinderförmige Rohrkörper 3 umfasst die sich axial erstreckenden ersten Bereiche 5 und zweiten Bereiche 7, die zwischen den ersten Bereichen 5 angeordnet sind und als radial umlaufenden Aussparungen zwischen den ersten Bereichen 5 ausgebildet sind. Die Wanddicke der zweiten Bereiche 7 ist geringer als die der ersten Bereiche 5. Der Innendurchmesser ist zumindest zwischen den Anschlussbereichen 11, 13, insbesondere jedoch zumindest jenseits des ersten Anschlussbereichs 11, konstant. Im ersten Anschlussbereich 11 kann der Rohrquerschnitt aufgeweitet sein, um die spitzseitigen Anschlussbereich 13 eines weiteren Rohres 1 einführen zu können. Der Innendurchmesser kann auch entlang des gesamten Rohres 1 konstant sein.

Die zweiten Bereiche 7 können vollständig mit dem zweitem Material 9 aufgefüllt sein, sodass Außendurchmesser des Rohres 1 in den ersten und zweiten Bereichen 5, 7 gleich sind. Alternativ können die Außendurchmesser des Rohres 1 bei den zweiten Bereichen 7 geringer als bei den ersten Bereichen 5 sein. Aber auch das Gegenteil ist denkbar.

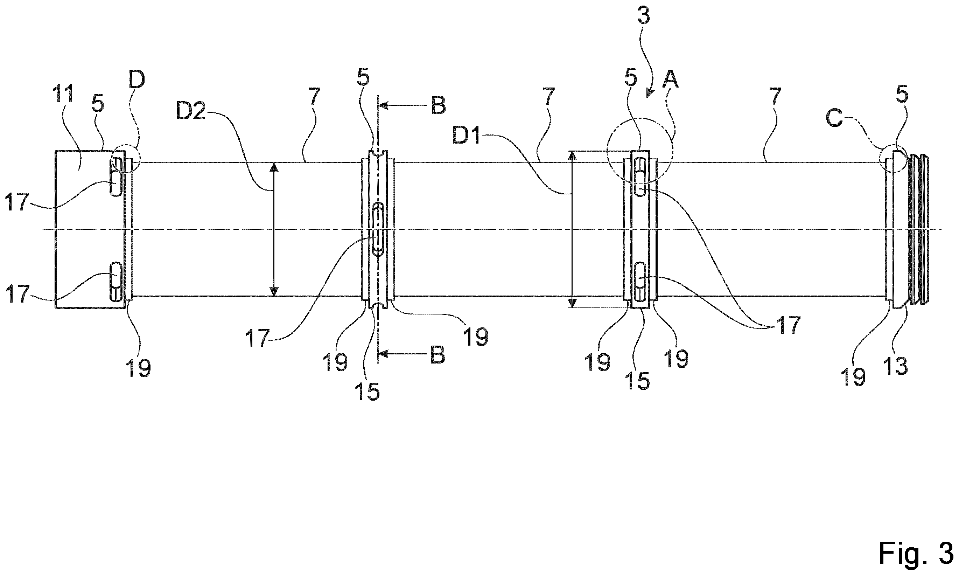

Figur 3 zeigt einen Rohrkörper 3 wie aus Figur 2 in einer Seitenansicht.

Die zweiten Bereiche 7 des Rohrkörpers 3 haben einen Außendurchmesser D2, der geringer ist als ein Außendurchmesser D1 der ersten Bereiche 5. Der Außendurchmesser D2 der zweiten Bereiche 7 ändert sich in axialer Richtung lediglich in Übergangsbereichen zu den ersten Bereichen 5, in denen eine radial umlaufende Stufe 19 oder ein abgerundeter Übergangsbereich (in Figur 3 nicht dargestellt) vorgesehen ist, um diese Übergangsbereiche zu verstärken.

Die als Spitzende ausgebildete zweite Muffe des zweiten Anschlussbereichs 13 kann in die erste Muffe des ersten Anschlussbereichs 11 eines weiteren Rohres 1 geschoben werden. Die zweite Muffe weist außenseitige Querschnittsänderungen mit zur Stirnseite schräg verlaufenden Außenquerschnittsverjüngungen und Außendurchmesserverjüngungen auf, die zum einen das Einschieben des Spitzendes erleichtern sollen und zum anderen das Herausrutschen aus der ersten Muffe erschweren sollen. Die erste Muffe hat einen konstanten Außenradius und einen Innenradius, der das Einführen des Spitzendes eines weiteren Rohres 1 erlaubt.

Das Spitzende weist mehrere umlaufende Rillen auf, bei denen jeweils ihre spitzseitige Seite eine geringere Steigung hat als ihre zum mittleren Rohrbereich gewandte Seite. Das Innere der ersten Muffe ist so geformt, dass die Rillen wie bei Rastfedern in der ersten Muffe einrasten können. Das Vorsehen mehrerer Rillen erlaubt eine gelenkige längskraftschlüssige Rastverbindung. Wenn die Spitzseite so eingeführt wird, dass auf einer Innenseite der Muffe mehr Rillen als auf der gegenüberliegenden Seite einrasten, weist die Verbindung zweier Rohre einen Knickt auf.

Die im mittleren Rohrbereich vorgesehenen ersten Bereiche 5 sind Rippen 15 auf der Rohrkörperaußenseite mit Schlitzen 17, die in diesem Ausführungsbeispiel umlaufend angeordnet sind. In einem anderen Ausführungsbeispiel können nur oberseitig angebrachte Schlitze 17 vorgesehen sein. In einem weiteren Ausführungsbeispiel, das vornehmlich zum Flüssigkeitstransport dient, sind in den Rippen 15 keine Schlitze 17 vorgesehen.

Ein in Figur 3 rechts gezeigtes Ausführungsbeispiel der Rippe 15 hat einen konstanten oder weitgehend konstanten Außenradius. Ein in Figur 3 links gezeigtes Ausführungsbeispiel der Rippe 15 hat einen sich zur Rippenmitte hin verjüngenden Außenradius; in diesem Bereich sind die Schlitze 17 angeordnet. Dies schützt die Schlitzränder vor außenmantelseitiger mechanischer Beanspruchung, beispielsweise beim Transport des Rohres 1 auf seinem Außenmantel. Das Vorsehen verschiedener Rippenausführungen in einem Rohr 1 dient in Figur 3 hauptsächlich der Veranschaulichung. Üblicherweise sind die Rippen 15 eines Rohres 1 in derselben Weise ausgebildet.

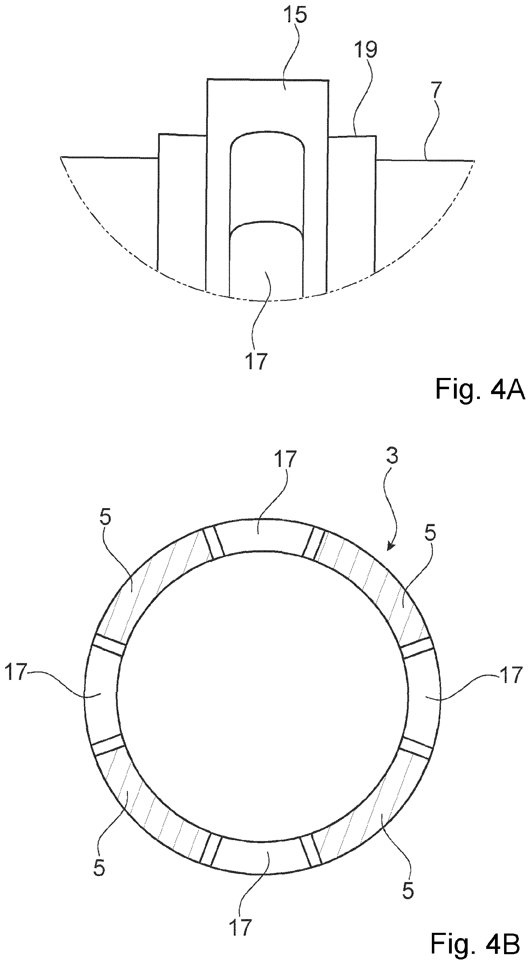

Figuren 4A bis 4D zeigen Details des Rohrkörpers 3 aus Figur 3.

Figur 4A zeigt einen Ausschnitt des Rohrprofils im Übergangsbereich der rechten Rippe 15 mit konstantem Außenradius zum zweiten Bereich 7. Am Rand der Rippe 15 ist eine radial umlaufende Stufe 19 vorgesehen, deren Außendurchmesser zwischen dem Außendurchmesser D2 des übrigen zweiten Bereichs 7 und dem Außendurchmesser D1 der Rippe 15 liegt.

Figur 4B zeigt einen Schnitt durch den Rohrkörper 3 entlang der Linie B-B in der linken Rippe 15. Die Rippe 15 weist vier äquidistante Schlitze 17 auf, die sich jeweils über ungefähr 40 Grad erstrecken.

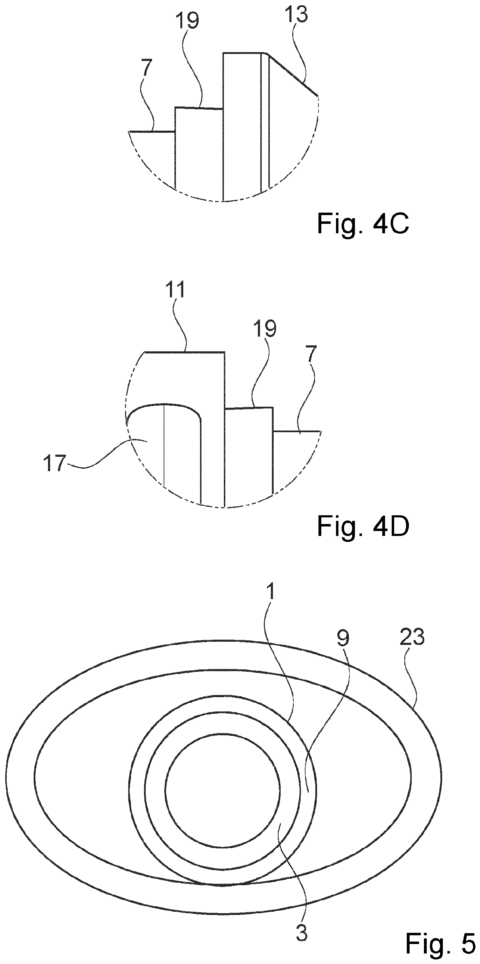

Figur 4C zeigt einen Ausschnitt des Rohrprofils im Übergangsbereich der zweiten Muffe an der Spitzseite zum zweiten Bereich 7. Am Übergang zum zweiten Anschlussbereich 13 ist eine radial umlaufende Stufe 19 vorgesehen, deren Außendurchmesser zwischen dem des übrigen zweiten Bereichs 7 und dem der Muffe liegt, deren Außendurchmesser sich zur Stirnseite hin wieder verjüngt.

Figur 4D zeigt einen Ausschnitt des Rohrkörperprofils im Übergangsbereich der ersten Muffe mit konstantem Außendurchmesser zum zweiten Bereich 7. Am Übergang zum Anschlussbereich 11 ist eine radial umlaufende Stufe 19 vorgesehen, deren Außendurchmesser zwischen dem des übrigen zweiten Bereichs 7 und der Muffe liegt.

Bei der Fertigung des Rohres 1 wird der Rohrkörper 3 aus einem kreiszylinderförmigen Rohrrohling gefertigt, indem zunächst zumindest die Aussparungen der zweiten Bereiche 7 ausgebildet werden. Stehen bleibende Bereiche zwischen den Aussparungen formen die ersten Bereiche 5.

Die zweiten Bereiche 7 werden mit dem zweiten Material 9 aufgefüllt. Dies kann durch ein Aufwickeln des zweiten Materials 9 als Faser oder Gewebeband erfolgen bis die Aussparung zumindest teilweise gefüllt ist. In einem Faserwickel- und Tränkverfahren werden die Fasern straff und eng aneinander liegend in den zweiten Bereichen 7 positioniert. Das Tränken kann vor dem Wickeln erfolgen. Alternativ können die Fasern auch nach dem Wickeln getränkt werden.

Hinsichtlich des Faserwickelverfahrens ist das Vorsehen von Stufen 19 im zweiten Bereich mit sprunghafter Außendurchmesseränderung einer kontinuierlichen Außendurchmesseränderung vorzuziehen. Es erleichtet die Programmierung einer Fertigungsanlage für das Faserwickeln, da der sich zu überwickelnde Bereich lediglich an der Stufe ändert und nur einmal entsprechend erfasst werden muss.

Alternativ zum oben beschriebenen Wickeln ist das Ummanteln der zweiten Bereiche 7 mit mattenförmigem zweitem Material 9 denkbar.

Vor oder nach dem Aufbringen des zweiten Materials 9 erfolgt die Fertigstellung der ersten Bereiche 5 jenseits der zweiten Bereiche 7. Dies kann Veränderungen des Außendurchmessers und die Einbringung funktioneller Strukturen, z.B. Schlitze 17, umfassen. Die Muffen werden durch Veränderungen des Außendurchmessers zumindest an der Spitzseite des Rohres 1 ausgebildet und ggf. durch Aufweitung des Innendurchmessers an der gegenüberliegenden Seite. In die Rippen 15 und Anschlussbereiche 11, 13 können Schlitze 17 eingebracht werden, z.B. durch Fräsen. Weitere funktionelle Strukturen, die ausgeformt werden können, sind z.B. stirnseitige, axial verlaufende Schlitze 21, wie in den Figuren 1 und 2 dargestellt, die Lagern, Transport oder Montage des Rohres 1 ermöglichen oder erleichtern.

Die Verwendung eines faserverstärkten Verbundmaterials als zweitem Material 9 ermöglicht die einfache Verarbeitung der Fasern bei der Fertigung und schließt die Fasern zudem ein, sodass sie beim Verlegen des Rohres 1 weder beschädigt werden noch Faserpartikel abgelöst werden, die eine Umweltbelastung oder gesundheitliche Beeinträchtigung darstellen könnten. Durch gezieltes Aufbringen des zweiten Materials 9 lediglich in den zweiten Bereichen 7 jenseits der ersten Bereiche 1 sind anschließend keine Fertigungsschritte, bei denen möglicherweise gesundheitsschädliche Faserpartikel abgelöst werden, mehr erforderlich. Dies ist insbesondere bei der Verwendung von Basalt ein wichtiger Aspekt, da Basaltfasern sehr spröde sind, abbrechen und beispielsweise in die Haut eindringen können.

Da in den zweiten Bereichen 7 nach dem Ausbilden der Aussparungen und dem Aufbringen des zweiten Materials 9 keine spanabtragenden Fertigungsschritte, z.B. Fräsen und Sägen, mehr erfolgen, werden Probleme vermieden, die bei der Verarbeitung von faserverstärktem Material entstehen können. Dadurch wird eine Belastung von Mensch und Umwelt mit Faserspänen und den damit möglicherweise einhergehenden Risiken für Gesundheit und Umwelt vermieden. Die Fasern im Faser-Kunststoff-Verbundmaterial sind vor mechanischen Belastungen und Abrieb bei Transport und späterer Montage der Rohre 1 geschützt. Nichtsdestotrotz kann noch eine außenmantelseitige Schutzschicht auf zumindest dem zweiten Material 9, beispielsweise in Form eines Schrumpfschlauches, aufgebracht werden. Solch eine optionale Beschichtung an der Außenseite des Rohres 1 kann zwischen den Anschlussbereichen 11, 13 verlaufen. Der Schrumpfschlauch kann verklebt sein.

Figur 5 zeigt einen Querschnitt eines Rohres 1, das im Rahmen einer grabenlosen Sanierung in ein deformiertes Altrohr 21 eingebracht worden ist. Ober- und Unterseite des ellipsenähnlich deformierten Altrohres 21 haben einen geringeren Abstand als die Seiten des Altrohres 21. Der Durchmesser des in das Altrohr 1 eingelegten Rohres 1 mit im Wesentlichen kreisförmigem Querschnitt ist so gewählt, dass im deformierten Altrohr 21 ausreichend Platz ist, d.h. der Durchmesser des Rohres 1 ist zumindest etwas geringer als der Abstand von Ober- und Unterseite des Altrohres 21.

Bei der Sanierung werden die Rohre 1 in die Altleitung, beispielsweise mittels eines ferngelenkten Roboters, geschoben und miteinander verbunden, um die Entwässerungsfunktion des Rohrleitungssystems weiter aufrecht zu erhalten. Im von der Altleitung geformten Hohlraum liegen die Rohre 1 allerdings nur an der Unterseite auf, sodass sie bei weiterer Deformation des Altrohres 21 oder dessen Einbruch ohne seitliche Stützwirkung der von oben wirkenden Belastung ausgesetzt sind. Die durch das zweite Material 2 erzielte Verstärkung bewirkt jedoch eine ausreichende Stabilität des Rohrs 1.

Die beschriebenen Rohre 1 sind jedoch nicht auf den Einsatz als Deponiesickerrohre geschränkt, sondern können auch als Sickerrohre oder als Fluidtransportrohre oder Flüssigkeitstransportrohre in anderen Bereichen, in denen insbesondere chemische Beständigkeit gepaart mit mechanischer Stabilität von Belang sind, jenseits von Deponien und/oder grabenloser Rohrsanierung eingesetzt werden.

Die vorstehend und die in den Ansprüchen angegebenen sowie die den Abbildungen entnehmbaren Merkmale sind sowohl einzeln als auch in verschiedener Kombination vorteilhaft kombinierbar und realisierbar.

### Bezugszeichen

- 1: Rohr
- 3: Rohrkörper
- 5: erster Bereich
- 7: zweiter Bereich
- 9: zweites Material
- 11: erster Anschlussbereich
- 13: zweiter Anschlussbereich
- 15: Rippe
- 17: Loch/Schlitz
- 19: Stufe
- 21: Schlitz
- 23: Altrohr
- D1, D2: Durchmesser

## Patentansprüche

1. Rohr (1) mit einem Rohrkörper (3) aus einem ersten Material,
der eine Innenwand des Rohres (1) bildet und
der sich axial erstreckende erste Bereiche (5) und zumindest zwei sich axial erstreckende zweite Bereiche (7) aufweist,
wobei die Innenwand des Rohres (1) aus dem ersten Material ist und
wobei die zweiten Bereiche (7) jeweils eine radial umlaufende Aussparung im Rohrkörper (3) zwischen zwei ersten Bereichen (5) sind, die mit einem auf dem ersten Material aufgebrachten zweiten Material (9) zumindest teilweise aufgefüllt ist,
wobei sich das erste Material vom zweiten Material (9), das faserverstärkt ist, unterscheidet und **dadurch gekennzeichnet ist, dass** zumindest einer der ersten Bereiche (5) zwischen den zwei zweiten Bereichen (7) angeordnet ist und rippenförmig umlaufend ausgebildet ist.

2. Rohr (1) nach Anspruch 1,
wobei zumindest einer der ersten Bereiche (5) als stirnseitiger Anschlussbereich (11, 13) des Rohrs ausgebildet ist.

3. Rohr (1) nach Anspruch 1 oder 2,
wobei der zumindest eine der ersten Bereiche (5) zumindest ein Loch (17) umfasst, das einen Flüssigkeitseintritt und/oder -ausritt ermöglicht.

4. Rohr (1) nach Anspruch 3,
wobei der zumindest eine erste Bereich (5) ein oder mehrere sich radial erstreckende Löcher (17) entlang seines Umfangs aufweist.

5. Rohr (1) nach einem der vorhergehenden Ansprüche,
wobei in einem Randbereich des zweiten Bereichs (7) zum ersten Bereich (5) eine radial umlaufende Stufe (19) oder eine kontinuierliche Außenquerschnittsänderung des Rohrkörpers (3) ausgebildet ist.

6. Rohr (1) nach Anspruch 4 oder 5,
wobei die zweiten Bereiche (7) und der dazwischen angeordnete erste Bereich (5) denselben Innendurchmesser haben und wobei eine Rohrkörperwanddicke der ersten Bereiche (5) größer ist als eine Rohrkörperwanddicke der zweiten Bereiche (7).

7. Rohr (1) nach einem der vorhergehenden Ansprüche,
wobei der Rohrkörper (3) gefräst ist.

8. Rohr (1) nach einem der vorhergehenden Ansprüche,
wobei das zweite Material (9) ein Faser-Kunststoff-Verbundmaterial ist.

9. Rohr (1) nach einem der vorhergehenden Ansprüche,
wobei das zweite Material (9) in den zweiten Bereichen (7) aufgewickelte Fasern umfasst.

10. Rohr (1) nach einem der vorhergehenden Ansprüche,
wobei das zweite Material (9) Basalt und/oder Glasfasern umfasst.

11. Rohr (1) nach einem der vorhergehenden Ansprüche,
wobei das erste Material Polyethylen umfasst.

12. Rohr (1) nach einem der vorhergehenden Ansprüche,
ferner umfassend eine außenmantelflächige Beschichtung zum Schutz vor mechanischer Beanspruchung.

13. Rohr (1) nach einem der vorhergehenden Ansprüche,
ausgebildet zur Ableitung von Sickerwasser, insbesondere Deponiesickerwasser.

## Claims

1. A pipe (1) comprising a pipe body (3) made of a first material,
which forms an inner wall of the pipe (1) and
which has axially extending first regions (5) and at least two axially extending second regions (7),
the inner wall of the pipe (1) being made of the first material and
the second regions (7) each being a radially circumferential recess in the pipe body (3) between the two first regions (5), which recess is at least partially filled with a second material (9) applied to the first material,
the first material being different from the second material (9), which is fiber-reinforced, and **characterized in that** at least one of the first regions (5) is arranged between the two second regions (7) and has a rib-like circumferential design.

2. The pipe (1) according to claim 1,
wherein at least one of the first regions (5) is formed as an end connection region (11, 13) of the pipe.

3. The pipe (1) according to either claim 1 or claim 2,
wherein the at least one of the first regions (5) comprises at least one hole (17) which enables a liquid inlet and/or outlet.

4. The pipe (1) according to claim 3,
wherein the at least one first region (5) has one or more radially extending holes (17) along its circumference.

5. The pipe (1) according to any of the preceding claims,
wherein a radially circumferential step (19) or a continuous outer cross-sectional change of the pipe body (3) is formed in an edge region of the second region (7) relative to the first region (5).

6. The pipe (1) according to either claim 4 or claim 5,
wherein the second regions (7) and the first region (5) arranged therebetween have the same inner diameter, and wherein a pipe body wall thickness of the first regions (5) is greater than a pipe body wall thickness of the second regions (7).

7. The pipe (1) according to any of the preceding claims,
wherein the pipe body (3) is milled.

8. The pipe (1) according to any of the preceding claims,
wherein the second material (9) is a fiber-plastics composite material.

9. The pipe (1) according to any of the preceding claims,
wherein the second material (9) in the second regions (7) comprises wound fibers.

10. The pipe (1) according to any of the preceding claims,
wherein the second material (9) comprises basalt and/or glass fibers.

11. The pipe (1) according to any of the preceding claims,
wherein the first material comprises polyethylene.

12. The pipe (1) according to any of the preceding claims,
further comprising a coating on the outer lateral surface for protection against mechanical stress.

13. The pipe (1) according to any of the preceding claims,
designed to discharge leachate, in particular landfill leachate.

## Revendications

1. Tuyau (1) comportant un corps de tuyau (3) constitué d'un premier matériau,
lequel forme une paroi interne du tuyau (1) et
lequel présente des premières zones (5) s'étendant axialement et au moins deux secondes zones (7) s'étendant axialement,
dans lequel la paroi interne du tuyau (1) est constituée du premier matériau et
dans lequel les secondes zones (7) sont respectivement un évidement s'étendant radialement dans le corps de tuyau (3) entre deux premières zones (5), lequel évidement est rempli au moins partiellement d'un second matériau (9) appliqué sur le premier matériau,
dans lequel le premier matériau est différent du second matériau (9), lequel second matériau est renforcé par des fibres, et **caractérisé en ce qu'**au moins l'une des premières zones (5) est disposée entre les deux secondes zones (7) et est réalisée de manière à s'étendre en forme de nervure.

2. Tuyau (1) selon la revendication 1,
dans lequel au moins l'une des premières zones (5) est réalisée sous la forme d'une zone de raccordement côté frontal (11, 13) du tuyau.

3. Tuyau (1) selon la revendication 1 ou 2,
dans lequel l'au moins une première zone des premières zones (5) comprend au moins un trou (17) qui permet une entrée de liquide et/ou une sortie de liquide.

4. Tuyau (1) selon la revendication 3,
dans lequel l'au moins une première zone (5) présente un ou plusieurs trous (17) s'étendant radialement le long de sa circonférence.

5. Tuyau (1) selon l'une des revendications précédentes,
dans lequel, dans une zone de bord de la seconde zone (7) par rapport à la première zone (5), un gradin (19) s'étendant radialement ou une modification continue de la section transversale externe du corps de tuyau (3) est réalisé.

6. Tuyau (1) selon la revendication 4 ou 5,
dans lequel les secondes zones (7) et la première zone (5) disposée entre celles-ci ont le même diamètre interne et dans lequel une épaisseur de paroi de corps de tuyau des premières zones (5) est supérieure à une épaisseur de paroi de corps de tuyau des secondes zones (7).

7. Tuyau (1) selon l'une des revendications précédentes,
dans lequel le corps de tuyau (3) est fraisé.

8. Tuyau (1) selon l'une des revendications précédentes,
dans lequel le second matériau (9) est un matériau composite fibres-plastique.

9. Tuyau (1) selon l'une des revendications précédentes,
dans lequel le second matériau (9) comprend des fibres enroulées dans les secondes zones (7).

10. Tuyau (1) selon l'une des revendications précédentes,
dans lequel le second matériau (9) comprend du basalte et/ou des fibres de verre.

11. Tuyau (1) selon l'une des revendications précédentes,
dans lequel le second matériau comprend du polyéthylène.

12. Tuyau (1) selon l'une des revendications précédentes,
comprenant en outre un revêtement en surface d'enveloppe externe pour la protection contre les contraintes mécaniques.

13. Tuyau (1) selon l'une des revendications précédentes,
conçu pour l'évacuation de lixiviats, en particulier de lixiviats de décharge.
